# EUROPÄISCHE PATENTSCHRIFT

(11) **EP 1 780 149 B1**
(45) Veröffentlichungstag und Bekanntmachung des Hinweises auf die Patenterteilung: **30.07.2008**
(21) Anmeldenummer: 05023566.2
(22) Anmeldetag: 27.10.2005
(51) Int. Cl.: B65G 1/137, G06Q 10/00

(54) **Automatische Erfassung von Waren im Hochregallager mit Hilfe von Transpondern**
Automatic record of warehouse inventory using transponders
Enregistrement automatique d'inventaire d'entrepôt à l'aide de transpondeurs

(43) Veröffentlichungstag der Anmeldung: 02.05.2007
(73) Patentinhaber: Dematic GmbH, 63073 Offenbach am Main (DE)
(72) Erfinder: Jungbluth, Volker, Dr., 63500 Seligenstadt (DE)
(74) Vertreter: Moser & Götze

(56) Entgegenhaltungen:
- WO-A-03/086906
- US-A1- 2002 038 267
- US-A1- 2003 077 153
- US-A1- 2003 222 001
- US-A1- 2003 222 762

## Beschreibung

Die Erfindung betrifft ein Verfahren zur automatischen Lagerguterfassung in einem Warenlager, insbesondere in einem Hochregallager, mit mindestens einem Bediengerät zum Transport des Lagergutes zu einem von einer Vielzahl ansteuerbarer Lagerplätze des Warenlagers, deren Adressen in einem Lagerverwaltungsrechner abgelegt sind oder werden, sowie mit einer das Lagergut erkennenden Identifikationsvorrichtung, die zum berührungslosen Auslesen eines Identifikationscodes an den Lagerplätzen vorbeibewegbar ist.

Beim Betrieb von Hochregallagern treten unabhängig von dem im Lagerverwaltungsrechner abgespeicherten Lagerbild des befüllten Warenlagers Fragestellungen auf, die die Erfassung des aktuellen Lagerbildes betreffen. So kann es beispielsweise zu Inventurzwecken erforderlich sein, die exakte Anzahl der im Lager eingelagerten Artikel zu kennen, für Korrekturzwecke der Einlagerung kann ebenfalls der Bedarf bestehen, das aktuelle Lagerbild zu erfassen. Des Weiteren werden die Informationen über den Lagerinhalt benötigt, um beispielsweise nach einem Systemfehler oder bei der Inbetriebnahme oder Befüllung der Anlage genauestens zu wissen, wo die einzelnen Artikel abgelegt sind. Bisher sind zu diesem Zweck sehr aufwendige und meist manuelle Maßnahmen zur Korrektur des Lagerbildes notwendig, die insbesondere bei Warenlagern mit hoher Stellplatzkapazität sehr arbeitsintensiv sind. Im Extremfall kann es sogar notwendig werden, nach Störungen eine systematische Auslagerung des gesamten Lagerbestandes vorzunehmen, diesen in der Vorzone zu identifizieren und rückzulagern.

Aus europäischen Patentschrift EP 0 198 402 ist ein Lager bekannt geworden, das eine vollautomatische Ein- und Auslagerung von Lagerartikeln beschreibt. Alle Lagerbewegungen werden von einem Lagerverwaltungsrechner zentral gesteuert, die Ein- und Auslagerung erfolgt unter Optimierungsgesichtspunkten. In diesem Stand der Technik wird bereits beschrieben, dass eine Diskrepanz zwischen dem im Lagerverwaltungssystem abgespeicherten Lagerplatz eines Lagerartikels und dem tatsächlich physischen Lagerplatz bestehen kann. Derartige Fehler können durch Bedienfehler oder durch unsachgemäße Reaktion auf Fehlermeldungen, durch Steuerfehler im Transportsystem etc. hervorgerufen werden.

Die EP 0 198 402 schlägt Maßnahmen vor, um den beschriebenen Fehler frühzeitig zu erkennen und zu korrigieren. Zu diesem Zweck werden den mobilen Lagereinheiten individuelle Identifikationscodes, beispielsweise als maschinell lesbare Aufkleber an der Lagereinheit zugeordnet, die mit Hilfe einer Identifikationsvorrichtung gelesen werden können. Die Identifikationsvorrichtung ist dabei an der Lagermaschine fest installiert, so dass die Information beim Vorbeifahren der Lagermaschine an dem Lager ausgelesen werden kann.

Nachteilig bei der vorstehend beschriebenen Lösung ist es, dass lediglich Lagereinheiten, wie Behälter, Paletten etc. markiert und identifiziert werden können, nicht jedoch die in den Lagereinheiten abgelegten Artikel. Somit ist zwar eine Lageortung der an einem Lagerplatz abgelegten Artikel möglich, jedoch nur hinsichtlich ihrer Ablage in einer der mit einem Aufkleber versehenen Lagereinheit. Es ist aber nicht möglich, den einzelnen Artikel zu erkennen und Aussagen, beispielsweise über die Anzahl der in einer Lagereinheit abgelegten Artikel zu treffen. Des Weiteren wird als nachteilig angesehen, dass die Lesevorrichtung für einen maschinell lesbaren Aufkleber in unmittelbarer Nähe dieses Aufklebers an der Lagereinheit vorbeibewegt werden muss, d. h. alle Lagereinheiten müssen so platziert und ausgerichtet sein, dass der Strichcode ausgelesen werden kann. Beschädigungen der Aufkleber führen zu Lesefehlern und verhindern die Datenerfassung.

Aufgabe der vorliegenden Erfindung ist es, ausgehend von dem beschriebenen Stand der Technik, ein Verfahren zur Erfassung des aktuellen Lagerbildes eines Warenlagers zu schaffen, mit dem zu Inventurzwecken, zu Korrekturzwecken, nach Systemfehlern oder bei der Inbetriebnahme und der Befüllung der Anlage die notwendigen Informationen über jeden einzelnen einzulagernden Artikel erfasst und verarbeitet werden.

Zur Lösung der Aufgabe wird erfindungsgemäß vorgeschlagen, dass in dem Warenlager abgelegte Artikel oder die Lagerhilfsmittel zur Aufnahme dieser Artikel und die Artikel mit einem Transponder versehen werden, der objektbezogene Daten auf dem Artikel selbst vorhält und diese berührungslos über Funk an ein Lesegerät überträgt, welches an dem Bediengerät angeordnet ist und welches mit dem Lagerverwaltungsrechner zum Abgleich der vom Lesegerät erfassten und in dem Lagerverwaltungsrechner gespeicherten Daten in Verbindung steht.

Aus der US 2003/0077153 A1 ist ein Verfahren zur automatischen Lagerguterfassung bekannt, bei dem eine Bedienvorrichtung des Lagers mit einem Sensor zum Auslesen eines Identifikationscodes versehen ist, wobei die Identifikationscodes auf einem entsprechenden Lagergut aufgebracht sind. Die Identifikationscodes können berührungslos ausgelesen werden.

Um Lesefehler der Funketiketten möglichst gering zu halten, wird nach einem weiteren Merkmal der Erfindung vorgeschlagen, gleichartige Artikel beim Einlagern der Waren auf nicht unmittelbar benachbarten Lagerplätzen abzulegen. Durch eine übergeordnete Lagerstrategie werden auf diese Weise Abstände zwischen den Lagerplätzen gleicher Artikel eingehalten, die ein deutlicheres Lesen der Transponder-Informationen ermöglichen.

Die Anordnung von Transpondern an vorzugsweise jedem einzelnen Artikel ermöglicht eine Identifikation des Artikels, auch wenn die exakte Positionierung des Transponders unbekannt ist und sich das Erfassungsgerät (Reader) nicht unmittelbar vor dem Transponder befindet. Die Anordnung der Transponder an den Lagerhilfsmitteln zur Aufnahme dieser Artikel ermöglicht die Zuordnung dieser Lagerhilfsmittel zu den Artikeln oder umgekehrt. Durch Anwendung der sog. RFID-Technik wird es möglich, die in einem TAG gespeicherten objektbezogenen Informationen über Funk an den Reader zu übertragen, wenn dieser in größerer Lagetoleranz vor dem Objekt vorbeibewegt wird oder sich dort befindet.

Als objektbezogen Daten sind beispielsweise die Art des Artikels, die Anzahl der Artikel des Lagerplatzes, die Zuordnung von Lagereinheit zum Artikel und die Zuordnung von Lagereinheit zum Lagerplatz denkbar. Über die momentane Position des Erfassungsgerätes während einer Vorbeifahrt an dem Warenlager kann auf das betreffende Fach geschlossen werden, indem die auszulesenden Artikel gelagert sind. Die ausgelesene Information wird mit dem Lagerverwaltungsrechner abgeglichen, um festzustellen, ob die richtige Anzahl richtiger Artikel am angegebenen Lagerplatz zur Verfügung steht. Differenzen können dementsprechend korrigiert werden.

Vorzugsweise geht mit der Erfassung der Daten mehrer Transponder ein Zählvorgang der an dem Lagerplatz abgelegten Artikel einher. Auf diese Weise kann nicht nur der Lagerplatz identifiziert und überprüft werden, sondern es können unmittelbar Aussagen über die Anzahl der verfügbaren und dort abgelegten Artikel getroffen werden. Dies ist insbesondere für Inventurzwecke von Vorteil; auch Lagerschwund kann durch einfaches Vorbeifahren des Bediengerätes mit dem Reader an dem Lager erfasst werden.

Der Einfachheit halber erfolgt die Erfassung der Daten als Zählvorgang der Artikel bei einer Linearfahrt des Bediengerätes. Je nach Anordnung des Readers am Mast des Bediengerätes oder am Hubkorb sind ein oder mehrere Linearfahrten erforderlich. Bei Anordnung am Hubkorb werden die einzelnen Fächer oder Fachböden linear in verschiedenen Hubstellungen des Hubkorbs abgefahren, während es auch denkbar ist, mehrere Reader in jeder Fachebene am Mast des Bediengerätes vorzusehen und bei einer Linearfahrt entlang des Warenlagers alle Informationen der einzelnen Fachebenen rechtzeitig zu erfassen.

Des Weiteren ist es auch denkbar, die Daten und das Zählen der Artikel während eines beliebigen Ein- und Lagerungsspiels des Bediengerätes durchzuführen. So kann jederzeit aktuell das Lagerbild erfasst und überprüft werden, ohne das zusätzliche Leerfahrten erforderlich sind.

Nach der Erfindung können auf die beschriebene Weise, nach Erfassen und Abgleichen der Daten mit denjenigen im Lagerverwaltungsrechner diejenigen Artikel identifiziert werden, die einem falschen Lagerplatz zugeordnet sind. Diese Artikel können entfernt und dem richtigen Lagerplatz zugewiesen werden.

Die Erfassung des Lagerbildes kann mit dem vorgeschlagenen Verfahren innerhalb kurzer Zeiträume durchgeführt werden. Der Abgleich der aufgenommenen Daten kann zur Korrektur der Systemdaten genutzt werden und mehrmals täglich durchgeführt werden. Verluste im Lager sind somit zu minimieren, Fehlbedienungen können ausgeglichen werden. Sollten einzelne Artikel nicht identifizierbar sein, können diese zur Identifikation kurzfristig ausgelagert werden. Bei Störungen oder Systemabstürzen lassen sich die ursprünglichen Lagerdaten einfach rekonstruieren. Zu Inventurzwecken können die gesamten Lagerdaten gescannt werden und buchungstechnische Korrekturen vorgenommen werden. Durch die mögliche zeitnahe Erfassung können Schwundquellen im Lager einfacherer zugeordnet werden.

Das beanspruchte Verfahren wird in der Anlage anhand von Schemazeichnungen erläutert. Es zeigt:
- Figur 1: ein Warenlager mit einem Bediengerät und am Hubschlitten angeordneten Lesegerät in schematischer Darstellung und
- Figur 2: der gleiche schematische Aufbau des Warenlagers mit am Mast des Bediengerätes angeordneten Lesegeräten.

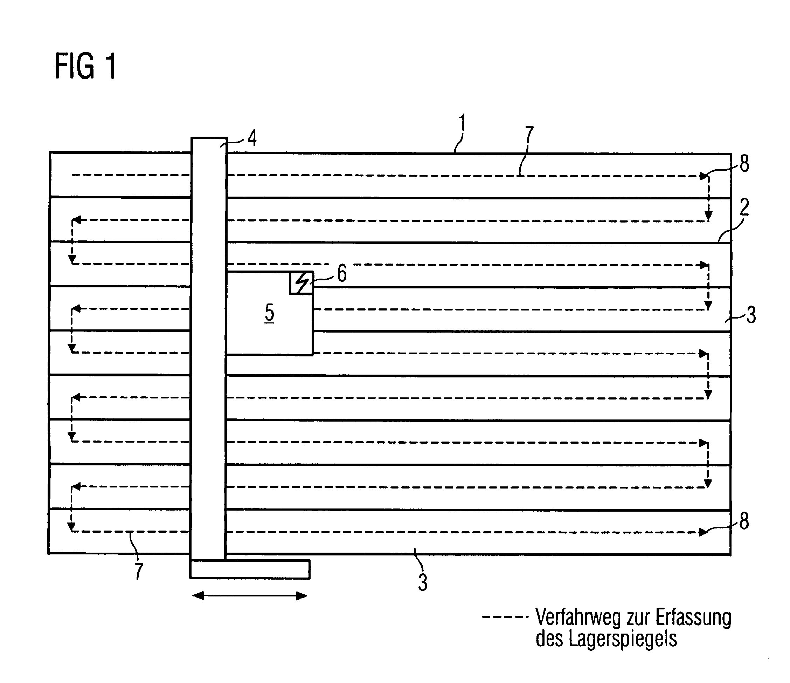

In Figur 1 ist mit 1 das Warenlager bezeichnet, welches neun übereinander angeordnete Lagerböden 2 aufweist, auf denen dreizehn horizontale Lagerplätze 3 gebildet werden. Das Warenlager 1 wird von einem Bediengerät 4 bedient, das als herkömmlich bekanntes Regalbediengerät ausgebildet ist. Das Bediengerät 4 ist an dem Warenlager 1 horizontal vorbeibewegbar. An dem Mast des Bediengerätes 4 ist der Hubschlitten 5 mit der (nicht dargestellten) Ein- und Auslagerungsvorrichtung vertikal bewegbar. Am Hubschlitten 5 ist mit 6 bezeichnet ein Lesegerät (Reader) angeordnet, mit dem in der RFID-Technik Informationen von Transpondern ausgelesen werden können, die an den einzelnen Artikeln in den Lagerfächern 3 per Funk ausgesendet werden. Um den gesamten Lagerbestand zu erfassen, wird das Bediengerät 4 vor dem Warenlager 1 horizontal hin und her verfahren, wobei der Hubschlitten 5 mit dem Lesegerät 6 nach jeder Linearfahrt in eine andere Fachebene angehoben wird und dort linear in entgegengesetzter Richtung zurückgefahren wird. Der Verfahrweg ist schematisch durch gestrichelte Linien 7 dargestellt, die Richtung ist durch Pfeile 8 angegeben.

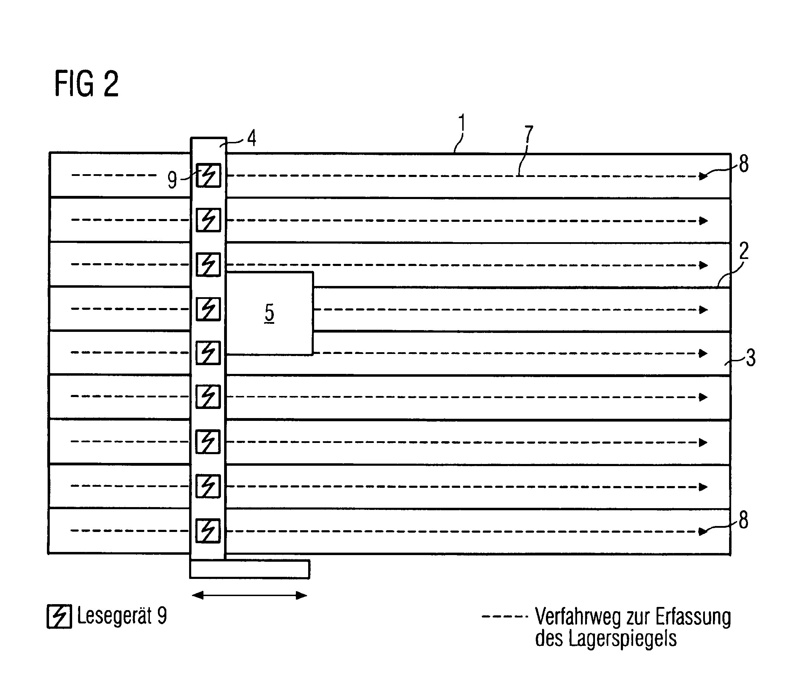

In Figur 2 ist eine Variante dargestellt, bei der den Lagerböden 2 entsprechend neun Lesegeräte 9 übereinander am Mast des Bediengerätes 4 angeordnet sind. Bei dieser Lösung ist nur eine einzige Linearfahrt entlang des Warenlagers 1 erforderlich, um alle eingelagerten Artikel zu erfassen. Auch hier ist der Verfahrweg der Lesegeräte 9 (Reader) durch die gestrichelten Linien 7 und die Pfeile 8 angegeben.

Die aus den Transpondern ausgelesenen Informationen werden dem (nicht dargestellten) Lagerverwaltungsrechner zur Auswertung zugeleitet. Fehler können durch Vergleich mit den im Lagerverwaltungsrechner abgelegten Einlagerungsdaten erfasst und anschließend korrigiert werden. In gleicher Weise können ausgelesene Informationen dem Lagerverwaltungsrechner zur Abspeicherung zugeführt werden, um ein neues aktuelles Lagerbild abzulegen.

## Patentansprüche

1. Verfahren zur automatischen Lagerguterfassung in einem Warenlager (1), insbesondere in einem Hochregallager, mit mindestens einem Bediengerät (4) zum Transport des Lagergutes zu einem von einer Vielzahl ansteuerbarer Lagerplätze (3) des Warenlagers (1), deren Adressen in einem Lagerverwaltungsrechner abgelegt sind oder werden, sowie mit einer das Lagergut erkennenden Identifikationsvorrichtung (6), die zum berührungslosen Auslesen eines Identifikationscodes an den Lagerplätzen vorbei bewegbar ist,
wobei in dem Warenlager (1) abgelegte Artikel oder die Lagerhilfsmittel zur Aufnahme dieser Artikel und die Artikel mit einem Transponder versehen werden, der objektbezogene Daten auf dem Artikel selbst vorhält und diese berührungslos über Funk an ein Lesegerät (6, 9) überträgt, welches an dem Bediengerät (4) angeordnet ist und welches mit dem Lagerverwaltungsrechner zum Abgleich der vom Lesegerät (6, 9) erfassten und in dem Lagerverwaltungsrechner gespeicherten Daten in Verbindung steht,
**dadurch gekennzeichnet,**
**dass** zur Vermeidung von Fehlzählungen gleichartige Artikel beim Einlagern der Waren auf nicht unmittelbar benachbarten Lagerplätzen (3) abgelegt werden.

2. Verfahren nach Anspruch 1,
**dadurch gekennzeichnet,**
**dass** mit der Erfassung der Daten mehrerer Transponder ein Zählvorgang der an dem Lagerplatz (3) abgelegten Artikel einhergeht.

3. Verfahren nach Anspruch 1 und 2,
**dadurch gekennzeichnet,**
**dass** die Erfassung der Daten und der Zählvorgang der Artikel bei einer Linearfahrt des Bediengerätes (4) erfolgt.

4. Verfahren nach Anspruch 1 und 2,
**dadurch gekennzeichnet,**
**dass** die Erfassung der Daten und der Zählvorgang der Artikel während eines beliebigen Ein- und Auslagerungsspiels des Bediengerätes (4) erfolgt.

5. Verfahren nach einem der Ansprüche 1 bis 4,
**dadurch gekennzeichnet,**
**dass** mit dem Erfassen und Abgleichen der Daten diejenigen Artikel identifiziert werden, die einem falschen Lagerplatz (3) zugeordnet sind.

## Claims

1. A method for automatically detecting stored items in a warehouse (1), particularly in a high-bay warehouse, comprising at least one operating device (4) for transporting the stored item to one of a plurality of accessible storage positions (3) of the warehouse (1), the addresses of which are stored or will be stored in a warehouse management computer, and an identification device (6) identifying the stored item which is movable past the storage positions in order to read an identification code in a non-contact manner, articles stored in the warehouse (1) or the storage means for picking up these articles and the articles being provided with a transponder which has object-relevant data available on the article itself and transmits the said data in a non-contact manner via radio to a reading device (6,9) which is arranged on the operating device (4) and communicates with the warehouse management computer in order to compare the data detected by the reading device (6,9) and the data stored in the warehouse management computer, **characterised in that**, in order to avoid incorrect counts, when placing the goods into storage identical articles are deposited on storage positions (3) which are not immediately adjacent to each other.

2. A method according to Claim 1, **characterised in that** the detection of the data of several transponders is accompanied by a count of the articles deposited at the storage position (3).

3. A method according to Claim 1 and 2, **characterised in that** the detection of the data and the count of the articles takes place in the course of a linear run of the operating device (4).

4. A method according to Claim 1 and 2, **characterised in that** the detection of the data and the count of the articles takes place in the course of an optional storage and retrieval cycle of the operating device (4).

5. A method according to one of Claims 1 to 4, **characterised in that** the articles that are assigned to an incorrect storage position (3) are identified by the detection and comparison of the data.

## Revendications

1. Procédé de détection automatique de marchandises stockables dans un magasin (1), notamment un magasin vertical à rayonnages, au moyen d'au moins un appareil de manoeuvre (4) permettant de transporter la marchandise stockable vers l'un des nombreux emplacements de stockage accessibles (3) du magasin (1) dont les adresses sont ou seront mémorisées dans un ordinateur de gestion de magasin, ainsi qu'au moyen d'un dispositif d'identification (6) qui détecte la marchandise stockable et qui est déplaçable devant les emplacements de stockage afin de lire sans contact un code d'identification,
des articles stockés dans le magasin (1) ou les moyens auxiliaires du magasin destinés à recevoir ces articles et les articles étant dotés d'un transpondeur qui place des données liées aux objets sur l'article lui-même et transmet ces données par voie hertzienne sans contact à un appareil de lecture (6, 9) qui est disposé sur l'appareil de manoeuvre (4) et qui est en liaison avec l'ordinateur de gestion de magasin pour adapter les données détectées par l'appareil de lecture (6, 9) et mémorisées dans l'ordinateur de gestion de magasin,
**caractérisé en ce que**
pour éviter des erreurs de comptage, des articles de même type sont stockés, lors du stockage des marchandises, à des emplacements de stockage (3) qui ne sont pas immédiatement voisins.

2. Procédé selon la revendication 1, **caractérisé en ce qu'**un processus de comptage des articles stockés à l'emplacement de stockage (3) accompagne la détection des données de plusieurs transpondeurs.

3. Procédé selon les revendications 1 et 2, **caractérisé en ce que** la détection des données et le processus de comptage des articles sont effectués lors d'un déplacement linéaire de l'appareil de manoeuvre (4).

4. Procédé selon les revendications 1 et 2, **caractérisé en ce que** la détection des données et le processus de comptage des articles sont effectués pendant un cycle quelconque de stockage et de déstockage de l'appareil de manoeuvre (4).

5. Procédé selon l'une des revendications 1 à 4, **caractérisé en ce que** les articles, qui sont associés à un mauvais emplacement de stockage (3), sont identifiés par la détection et l'adaptation des données.
